# EUROPÄISCHE PATENTSCHRIFT

(11) **EP 1 077 845 B1**
(45) Veröffentlichungstag und Bekanntmachung des Hinweises auf die Patenterteilung: **05.01.2005**
(21) Anmeldenummer: 00918697.4
(22) Anmeldetag: 11.03.2000
(51) Int. Cl.: B60S 1/52, B05B 1/32

(54) **SPRITZVORRICHTUNG FÜR EINE SCHEIBENWASCHANLAGE**
SPRAY DEVICE FOR A WINDSHIELD WASHER SYSTEM
SYSTEME DE PULVERISATION POUR LAVE-GLACE

(30) Priorität: 17.03.1999 DE 19911805
(43) Veröffentlichungstag der Anmeldung: 28.02.2001
(73) Patentinhaber: ROBERT BOSCH GMBH, 70442 Stuttgart (DE)
(72) Erfinder: ZIMMER, Joachim, D-77880 Sasbach (DE); FLEISCHER, Claus, D-77815 Buehl (DE)
(86) Internationale Anmeldenummer: PCT/DE2000/000770
(87) Internationale Veröffentlichungsnummer: WO 2000/055019

(56) Entgegenhaltungen:
- EP-A- 0 395 930
- FR-A- 2 673 154
- US-A- 5 323 963
- US-A- 5 433 382

## Beschreibung

### Stand der Technik

Die Erfindung geht von einer Spritzvorrichtung für eine Scheibenwaschanlage nach dem Oberbegriff des Anspruchs 1 aus, wie z.B. aus EP-A-0 395 930 bekannt ist.

Bekannte Scheibenwaschanlagen für Fahrzeuge werden in der Regel in Verbindung mit Scheibenwischern verwendet. Für Scheinwerfer reicht es in einigen Fällen aus, sie ohne Scheibenwischer, aber mit einem höheren Druck zu benutzen. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigemischt sind, mit Druck aus dem Wasserbehälter über Wasserleitungen zu den Spritzdüsen fördert. In der Regel sind die Spritzdüsen an einem Teil einer Fahrzeugkarosserie befestigt, beispielsweise an einer Motorhaube, einem Fensterrahmen oder dgl.

Um zu verhindern, daß die Spritzdüsen bei Temperaturen unter dem Gefrierpunkt einfrieren, sind in den Spritzdüsen Heizelemente integriert, die über außen liegende Stecker mit einer Stromversorgung verbunden sind. Die Heizelemente erfordern einen relativ hohen Fertigungsaufwand für die Spritzdüsen und einen großen Montageaufwand, um die elektrischen Leitungen zu verlegen und die Stecker zu kontaktieren. Es sind aber auch Heizeinrichtungen bekannt, die durch eine Wasserzuführung geführt und im Düsenkörper als Heizwendel ausgebildet sind.

Weiterhin ist bereits bekannt, Spritzdüsen als zusätzliche Bauteile am Wischblatt zu befestigen und somit das Spritzwasser direkt mit kurzer Strahllänge auf den Wischbereich zu verteilen. Da das Spritzwasser auf einen Bereich in der Nähe des Wischblatts konzentriert ist und durch die Wischbewegung in kürzester Zeit wieder abgewischt wird, ist die Sicht durch das aufgebrachte Spritzwasser nur kurzzeitig behindert. Ein Nachteil solcher Systeme ist, daß Witterungseinflüsse, insbesondere Hagel und extreme Sonneneinwirkung, die flexiblen Teile dieser Anordnung, die zum Überbrücken der gelenkigen Bereiche zwischen Wischarm und Wischblatt notwendig sind, stark beeinflussen. Ferner frieren die Spritzdüsen und Wasserleitungen, die dem Fahrtwind ausgesetzt sind, bei Temperaturen unter dem Gefrierpunkt schnell zu, wenn nicht genügend Antigefriermittel dem Wasser zugemischt ist. Die eingefrorenen Wasserleitungen und Spritzdüsen sind in der Regel nur mit großem Aufwand wieder aufzutauen.

In einer älteren Patentanmeldung, WO-A-99 28 171 ist ein Wischarm beschrieben, an dessen Gelenkteil bzw. an einer mit dem Gelenkteil einstückig verbundenen Wischstange Spritzdüsen angeordnet sind. Diese befinden sich in einem Düsenkörper. Dieser ist in einer Ausbuchtung des Gelenkteils mit einer Spritzöffnung für den Spritzstrahl untergebracht oder in einer seitlichen Halterung an der Wischstange nach unten vorstehend eingeklipst. Es können auch zwei Düsenkörper vorgesehen werden, die durch ein starres oder flexibles Verbindungsstück miteinander verbunden sind. Die Düsenkörper sind leicht austauschbar und gegenüber Umwelteinflüssen gut geschützt.

Zweckmäßigerweise hat die Spritzdüse ein nach außen hin öffnendes Rückschlagventil, das verhindert, daß die Wasserleitung sich bei längerer Nichtbenutzung der Waschanlage entleert. Diese Rückschlagventile arbeiten größtenteils nach dem Feder/Kugel-System. Sie sollen verhindern, daß die Wasserleitung nur teilweise gefüllt und der Wärmeübergang vom Heizelement zum Wasser gestört ist. Ferner können Wasserreste örtlich überhitzt werden und verdampfen. Dadurch entstehen Kalkablagerungen, die im Laufe der Zeit die engen Kanäle in der Spritzdüse zusetzen.

Im übrigen ergeben sich einfache Lösungen, indem die Düsenkörper einstückig und als Spritzgußteil aus Kunststoff hergestellt sind. Die Spritzdüsen sind entweder fest im Düsenkörper gelagert oder über einen Kugelsitz einstellbar gelagert. Durch die am Wischarm verteilten Düsenkörper wird das Spritzwasser gut über den Wischbereich verteilt, insbesondere wenn ein Spritzstrahl in einem unteren Bereich direkt vor das Wischblatt gelenkt wird. Da sich durch die Anordnung kurze Strahllängen ergeben, kann der Fahrtwind selbst bei höherer Fahrgeschwindigkeit die Spritzwasserverteilung nur wenig beeinflussen.

Es sind auch Scheibenwaschanlagen bekannt, die ohne Scheibenwischer verwendet werden, da die Geometrie der zu säubernden Fläche deren Einsatz ausschließt. Es handelt sich hierbei um Waschanlagen für Scheinwerferscheiben.

### Vorteile der Erfindung

Nach der Erfindung ist die Spritzdüse axial beweglich in dem Düsengehäuse gehalten. Sie wird beim Spritzvorgang an einer dem Wasseranschluß zugewandten Stirnseite vom Wasserdruck beaufschlagt, während sie mit ihrer anderen Stirnseite an einem Verschlußteil anliegt. Dieses deckt die Düsenbohrung dichtend ab, bis es durch die Axialverschiebung der Spritzdüse in eine geöffnete Position gebracht wird und die Düsenbohrung freigibt. Das Verschlußteil wird nicht durch das austretende Waschwasser geöffnet und offen gehalten, sondern mechanisch durch die Spritzdüse, wobei die Kraft, die zum Öffnen auf das Verschlußteil wirkt, durch die Höhe des Spritzdrucks und die Größe der dem Wasseranschluß zugewandten, wirksamen Stirnfläche der Spritzdüse bestimmt ist. So kann schon bei einem geringen Spritzdruck durch eine entsprechende Dimensionierung der wirksamen Stirnfläche eine ausreichende Öffnungskraft erzeugt werden.

Das Verschlußteil ist zweckmäßigerweise aus Kunststoff gefertigt und besitzt einen Stützring, mit dem es im Düsengehäuse und/oder in einem darin gelagerten Düsenkörper gehalten ist. An den Stützring schließt sich eine gummielastische Membran mit einer zentralen, dehnfähigen Öffnung und Dichtlippen an, die durch die axiale Bewegung der Spritzdüse geöffnet und geschlossen werden und im geöffneten Zustand einen ungehinderten Durchtritt des Spritzstrahls gestatten. Beim Schließen wirken sie als Dichtelement. Diese Anordnung und die Gestaltung des Verschlußteils ermöglichen es, daß in den Ruhephasen zwischen den Waschintervallen alle wasserführenden Bauteile und Kanäle der Spritzvorrichtung verschlossen werden. Dadurch tritt beim Wischbetrieb ohne Waschfunktion kein Waschwasser aus, auch nicht bei hohen Wischfrequenzen bzw. hubgesteuerten Wischarmen, bei denen erhöhte Beschleunigungskräfte auf das Waschwasser wirken. Infolgedessen wird weniger Waschwasser verbraucht. Da unter Umständen dem Wasser auch Reinigungsund Antigefriermittel beigemischt sind, wird deren Verbrauch ebenfalls verringert.

Im Winter muß die Spritzvorrichtung beheizt werden, um eine einwandfreie Funktion zu gewährleisten. Hierzu ist eine Heizleitung vorgesehen, die durch den Wasseranschluß und das Düsengehäuse bis in die Nähe der Spritzdüse verläuft. Da die wasserführenden Kanäle bis unmittelbar vor dem Austritt gefüllt bleiben, ist zum einen stets ein guter Wärmeübergang zwischen der Heizleitung und dem Waschwasser sowie der Spritzdüse gewährleistet. Gleichzeitig wird verhindert, daß sich das Waschwasser überhitzt und verdampft, was zu schädlichen Ablagerungen in den Wasserkanälen und der Düsenbohrung führen könnte.

Das Verschlußteil mit seiner Membran und seinen Dichtlippen ist konstruktiv so gestaltet und seine Elastizität so gewählt, daß es gleichzeitig beim Öffnen eine Rückstellkraft erzeugt, die die Spritzdüse in die Ruheposition zurückschiebt. So kann ein Federmechanismus entfallen. Es ergibt sich eine einfache Bauweise mit wenigen Bauteilen, einem geringen Montageaufwand und niedrigen Kosten. Damit das elastische Verschlußteil durch einen hohen Spritzdruck nicht überbeansprucht werden kann, wird seine Öffnungsbewegung durch einen Anschlag begrenzt. Es wird dadurch eine definierte Öffnungsgeometrie sichergestellt, die den Spritzstrahl nicht behindert, so daß der Spritzstrahl auch bei einem geringeren Pumpendruck den Schmutz gut lösen und die Scheibe wirkungsvoll reinigen kann. Ferner wird verhindert, daß ein hoher Spritzdruck die Spritzdüse durch die Öffnung des Verschlußteils drückt.

Der Anschlag wird zweckmäßigerweise von einem Ring gebildet, welcher gleichzeitig das Verschlußteil im Düsengehäuse festhält. Eine weitere Variante ergibt sich durch eine Gestaltung des Verschlußteils, das die Form einer Kappe aufweist und am Außendurchmesser des Düsengehäuses befestigt ist. Den Anschlag bildet eine am Verschlußteil angeformte Wulst. Bei dieser kostengünstigen Variante entfällt der Ring. Ferner wird die Spritzdüse durch das kappenförmige Verschlußteil aus Kunststoff gut wärmeisoliert.

Um den Spritzstrahl optimal einstellen zu können, ist die Spritzdüse in einem Düsenkörper axial beweglich gelagert, der seinerseits über einen Kugelsitz im Düsengehäuse in einem begrenzten Winkelbereich einstellbar gelagert ist. Hierbei sind alle Varianten des Verschlußteils ebenfalls anwendbar. Die kompakte Bauweise der Spritzvorrichtung ist besonders für einen Einbau an einem Wischarm geeignet.

### Zeichnung

In der Zeichnung sind Ausführungsbeispiele der Erfindung dargestellt. 'Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen teilweisen Längsschnitt durch eine Spritzvorrichtung mit einer verschiebbaren Spritzdüse und einem Verschlußteil im geschlossenen Zustand,
- Fig. 2: eine Ansicht entsprechend dem Pfeil II in Fig. 1,
- Fig. 3: einen teilweisen Längsschnitt durch eine Spritzvorrichtung nach Fig. 1 im geöffneten Zustand,
- Fig. 4: eine Variante zu Fig. 3 und
- Fig. 5: eine weitere Variante zu Fig. 3.

### Beschreibung der Ausführungsbeispiele

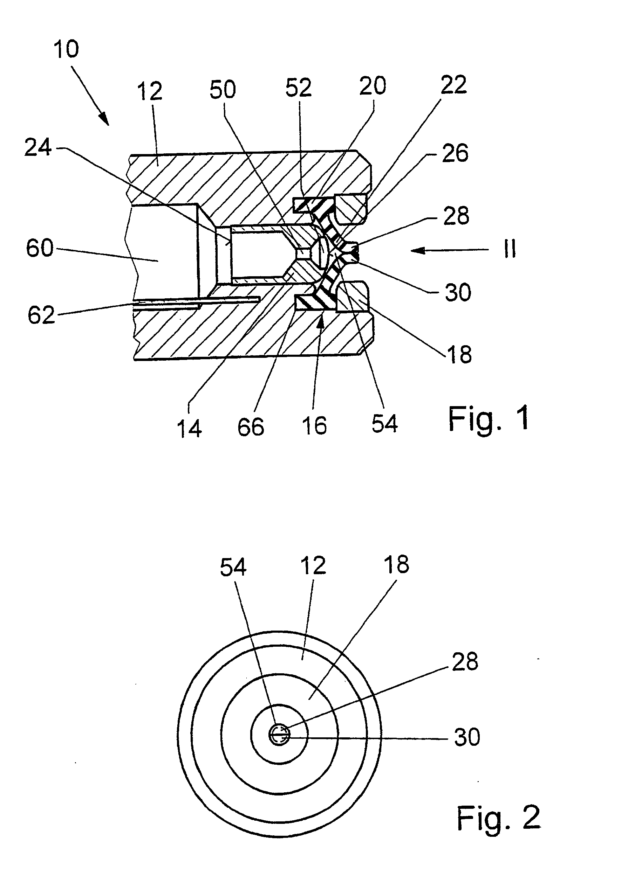

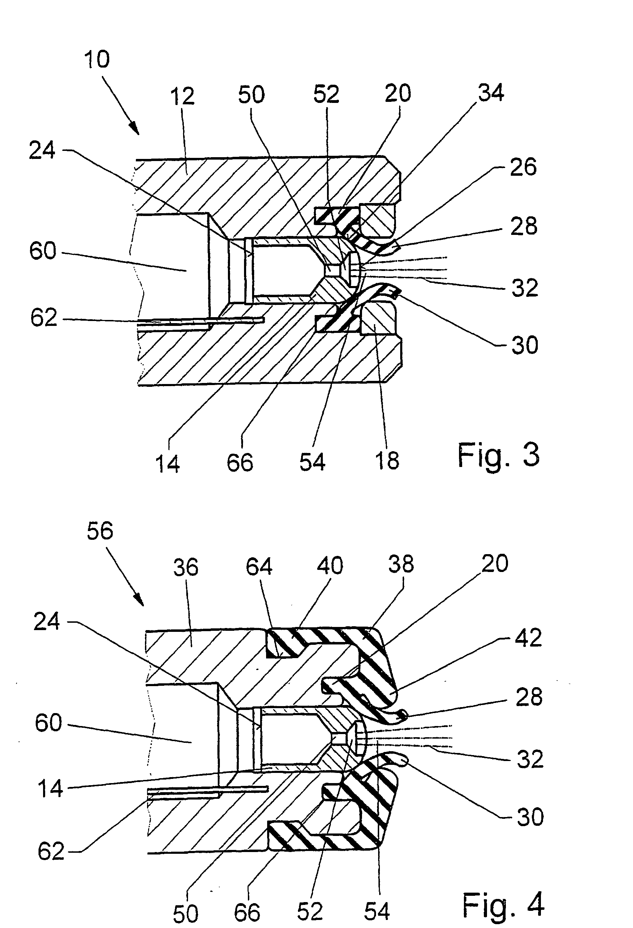

Eine Spritzvorrichtung 10 nach Fig. 1 besitzt eine Spritzdüse 14, die eine Düsenbohrung 50 mit einer zum Auslaß gerichteten trichterförmigen Erweiterung 52 hat, und in einem Düsengehäuse 12 mit einem Wasseranschluß 60 axial beweglich gelagert ist. Beim Spritzvorgang wird die Spritzdüse 14 an einer Stirnseite 24, die dem Wasseranschluß 60 zugewandt ist, vom Wasserdruck beaufschlagt und drückt mit ihrer anderen Stirnseite 26 gegen die Innenseite 34 eines Verschlußteils 16, welches die Düsenbohrung 50 verschließt, bis es durch die Axialverschiebung der Spritzdüse 14 geöffnet wird (Fig. 3).

Das Verschlußteil 16 ist aus Kunststoff hergestellt und weist einen Stützring 20 auf. Dieser ist in eine stirnseitige Vertiefung 66 des Düsengehäuses 12 eingesetzt und umschließt eine gummielastische Membran 22, die eine zentrale, dehnfähige Öffnung 54 im Bereich der Düsenbohrung 50 hat. An die Öffnung 54 schließen sich Dichtlippen 28 und 30, die im geschlossenen Zustand mit ihren Dichtflächen 68 dichtend aneinander liegen und im geöffneten Zustand durch die Spritzdüse 14 soweit gespreizt werden, daß ein Spritzstrahl 32 ungehindert durchströmen kann. Dabei wird die Öffnung 54 entsprechend gedehnt und werden die zunächst flachen Dichtflächen 68 der Dichtlippen 28, 30 leicht gewölbt. Ein Ring 18, welcher im Düsengehäuse 12 eingepreßt oder eingeschraubt ist, dient zur Befestigung des Verschlußteils 16, indem er den Stützring 20 in der Vertiefung 66 hält, und gleichzeitig als Anschlag der Dichtlippen 28 und 30 beim Spritzvorgang.

Beim Abschalten der Pumpe wird der Wasserdruck abgebaut und eine durch die Geometrie und Elastizität des Verschlußteils 16 gegebene Eigenspannung schiebt die Spritzdüse 14 in die Ruhelage zurück, so daß sich die Öffnung 54 wieder verengt und die Dichtlippen 28 und 30 schließen.

Fig. 4 zeigt eine Spritzvorrichtung mit einer Variante 38 des Verschlußteils 16, welches die Form einer Kappe aufweist. Das Verschlußteil 38 hat an einem zum Wasseranschluß 60 weisenden Ende eine Wulst 40, die in einer Ringnut 64 des Düsengehäuses 36 eingebettet ist und damiz zur Befestigung dient. Das Verschlußteil 38 ist ebenfalls ein elastisches Element und besitzt die vorher beschriebenen Dichtlippen 28 und 30. Den Anschlag dieser Dichtlippen 28, 30 im geöffneten Zustand bildet eine Wulst 42, die an dem Verschlußteil 38 angeformt ist. Auch bei dieser Variante ist der Öffnungsmechanismus der Dichtlippen 28, 30 wie beim Verschlußteil 16, so daß bei beiden Varianten die Strahlgeometrie primär durch die Düsenbohrung 50 bestimmt wird. Ein Anschlag in Form eines Ringes 18 oder einer Wulst 42 sichert eine definierte lichte Weite beim Spritzvorgang.

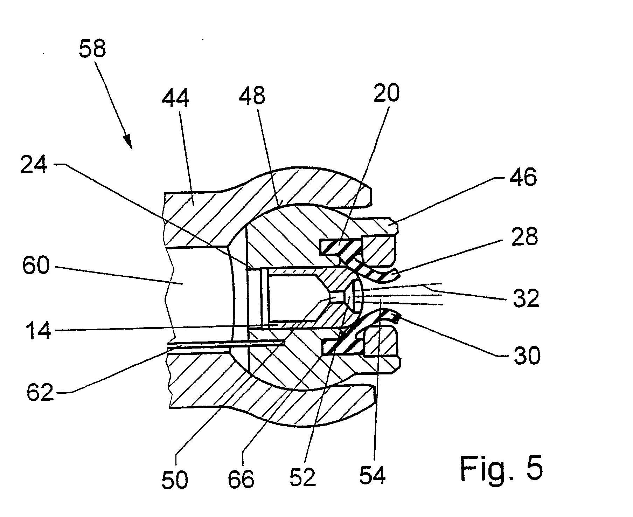

Die Spritzdüse 14 ist entweder im Düsengehäuse 12 (Fig. 1, 3 oder 4) unmittelbar axial verschiebbar gelagert oder sie wird in einem Düsenkörper 46 aufgenommen, der seinerseits über einen Kugelsitz 48 im Düsengehäuse 44 gehalten wird (Fig. 5). Dadurch kann die Düsenbohrung 50 und mit ihr der Spritzstrahl 32 in einem begrenzten Winkelbereich eingestellt werden. Es können hierbei gleiche Verschlußteile 16, 38 verwendet werden wie bei den anderen Varianten.

Um die Spritzvorrichtung 10, 56, 58 zu beheizen, führt eine Heizleitung 62 durch den Wasseranschluß 60 bis in die Nähe der Spritzdüse 14, so daß sich die Wärmeabgabe auf die Spritzdüse 14 und das Waschwasser konzentriert. Alle wasserführenden Bauteile sind beim Nichtbetätigen der Spritzvorrichtungen 10, 56 ,58 durch die Dichtlippen 28 und 30 verschlossen, so daß kein Restwasser einfrieren kann und auch bei niedrigen Temperaturen eine einwandfreie Funktion gewährleistet ist.

## Patentansprüche

1. Spritzvorrichtung (10, 56, 58) für eine Scheibenwaschanlage mit einer Spritzdüse (14), die eine Düsenbohrung (50) hat, in einem Düsengehäuse (12) mit einem Wasseranschluß (60) gelagert ist und eine Einrichtung aufweist, die ein Rückströmen und ein unkontrolliertes Austreten von Spritzwasser verhindert, die Spritzdüse (14) axial beweglich in dem Düsengehäuse (12) gehalten ist und beim Spritzvorgang an einer dem Wasseranschluß (60) zugewandten Stirnseite (24) vom Wasserdruck beaufschlagt wird, **dadurch gekennzeichnet, daß** die Spritzdüse (14) mit ihrer anderen Stirnseite (26) an einem Verschlußteil (16, 38) anliegt, das die Düsenbohrung (50) dichtend abdeckt, bis es durch die Axialverschiebung der Spritzdüse (14) in eine geöffnete Position gebracht wird und die Düsenbohrung (50) freigibt.

2. Spritzvorrichtung (10, 56, 58) nach Anspruch 1, **dadurch gekennzeichnet, daß** das Verschlußteil (16, 38) einen Stützring (20) hat, mit dem es im Düsengehäuse (12) und/oder in einem darin gelagerten Düsenkörper (46) gehalten ist und der eine gummielastische Membran (22) umschließt, die eine zentrale, dehnfähige Öffnung (54) im Bereich der Düsenbohrung (50) aufweist, an die sich mindestens eine nach außen weisende Dichtlippe (28, 30) zum Verschließen der Öffnung (54) anschließt.

3. Spritzvorrichtung (10, 56, 58) nach Anspruch 2, **dadurch gekennzeichnet, daß** die Eigenspannung der Membran (22) und/oder der Dichtlippe (28, 30) eine Rückstellkraft für die Spritzdüse (14) erzeugt.

4. Spritzvorrichtung (10, 58) nach Anspruch 2 bis 3, **dadurch gekennzeichnet, daß** der Stützring (20) in eine stirnseitige, ringförmige Vertiefung (66) des Düsengehäuses (12) bzw. des Düsenkörpers (46) eingelassen ist und durch einen Ring (18) gehalten wird, der im geöffneten Zustand gleichzeitig als Anschlag dient.

5. Spritzvorrichtung (10, 58) nach Anspruch 4, **dadurch gekennzeichnet, daß** der Ring (18) im Düsengehäuse (12) bzw. dem Düsenkörper (46) eingepreßt oder eingeschraubt ist.

6. Spritzvorrichtung (56) nach Anspruch 2 oder 3, **dadurch gekennzeichnet, daß** das Verschlußteil (38) als Verschlußkappe ausgebildet ist, das das Düsengehäuse (12) umfaßt und mit einer Wulst (40) in eine Ringnut (64) des Düsengehäuses (12) greift.

7. Spritzvorrichtung (56) nach Anspruch 6, **dadurch gekennzeichnet, daß** das Verschlußteil (38) eine um die Dichtlippen (28, 30) angeformte Wulst (42) aufweist, die im geöffneten Zustand als Anschlag für die Dichtlippen (28, 30) und die axiale Bewegung der Spritzdüse (14) dient.

8. Spritzvorrichtung (58) nach einem der vorhergehenden Ansprüche, **dadurch gekennzeichnet, daß** eine Spritzdüse (14) in einem Düsenkörper (46) axial verschiebbar gelagert ist, wobei der Düsenkörper (46) im Düsengehäuse (44) über einen Kugelsitz (48) in einem begrenzten Winkelbereich einstellbar gelagert ist.

9. Spritzvorrichtung (10, 56, 58) nach einem der vorhergehenden Ansprüche, **dadurch gekennzeichnet, daß** die Öffnung (54) im geöffneten Zustand so weit ist, daß ein Spritzstrahl (32) ungehindert durch die geöffneten Dichtlippen (28, 30) des Verschlußteils (16, 38) strömt, wobei die Strahlgeometrie durch die Düsenbohrung (50) definiert wird.

10. Spritzvorrichtung (10, 56, 58) nach einem der vorhergehenden Ansprüche, **dadurch gekennzeichnet, daß** eine Heizleitung (62) durch den Wasseranschluß (60) und eine Bohrung im Düsengehäuse (12) bis in die Nähe der Spritzdüse (14) geführt ist.

## Claims

1. Spray device (10, 56, 58) for a windscreen washer system, having a spray nozzle (14) which has a nozzle hole (50), is mounted in a nozzle housing (12) having a water connection (60) and has a device which prevents backflow and an uncontrolled discharge of spray water, the spray nozzle (14) being held in an axially movable manner in the nozzle housing (12) and, during the spraying process, being acted upon on an end side (24) facing the water connection (60) by the water pressure, **characterized in that** the spray nozzle (14) bears with its other end side (26) against a closure part (16, 38) which covers the nozzle hole (50) in a sealing manner until it is brought by the axial displacement of the spray nozzle (14) into an open position and releases the nozzle hole (50).

2. Spray device (10, 56, 58) according to Claim 1, **characterized in that** the closure part (16, 38) has a supporting ring (20) with which it is held in the nozzle housing (12) and/or in a nozzle body (46) mounted therein, and which surrounds a rubber-elastic membrane (22) which has a central expandable opening (54) in the region of the nozzle hole (50) which is adjoined by at least one outwardly pointing sealing lip (28, 30) for closing the opening (54).

3. Spray device (10, 56, 58) according to Claim 2, **characterized in that** the inherent stress of the membrane (22) and/or of the sealing lip (28, 30) produces a resetting force for the spray nozzle (14).

4. Spray device (10, 58) according to Claims 2 to 3, **characterized in that** the supporting ring (20) is embedded in an end-side, annular depression (66) of the nozzle housing (12) or of the nozzle body (46) and is held by a ring (18) which, in the open state, serves at the same time as a stop.

5. Spray device (10, 58) according to Claim 4, **characterized in that** the ring (18) is pressed or screwed into the nozzle housing (12) or the nozzle body (46).

6. Spray device (56) according to Claim 2 or 3,
**characterized in that** the closure part (38) is designed as a closure cap which surrounds the nozzle housing (12) and reaches with a bead (40) into an annular groove (64) of the nozzle housing (12).

7. Spray device (56) according to Claim 6, **characterized in that** the closure part (38) has a bead (42) which is integrally formed around the sealing lips (28, 30) and, in the open state, serves as a stop for the sealing lips (28, 30) and the axial movement of the spray nozzle (14).

8. Spray device (58) according to one of the preceding claims, **characterized in that** a spray nozzle (14) is mounted in an axially displaceable manner in a nozzle body (46), the nozzle body (46) being mounted in the nozzle housing (44) via a ball seat (48) in a manner such that it can be adjusted within a limited angular range.

9. Spray device (10, 56, 58) according to one of the preceding claims, **characterized in that** the opening (54) is so wide in the open state that a spray jet (32) flows unobstructed through the open sealing lips (28, 30) of the closure part (16, 38), with the jet geometry being defined by the nozzle hole (50).

10. Spray device (10, 56, 58) according to one of the preceding claims, **characterized in that** a heating line (62) is guided through the water connection (60) and a hole in the nozzle housing (12) and into the vicinity of the spray nozzle (14).

## Revendications

1. Système de pulvérisation (10, 56, 58) pour lave-glace comportant une buse de pulvérisation (14) qui possède un perçage de buse (50), est logée dans un boîtier de buse (12) équipé d'un raccordement d'eau (60), et présente un dispositif qui empêche un refoulement et une sortie incontrôlée d'eau de pulvérisation, la buse de pulvérisation (14) étant maintenue dans le boîtier de buse (12) de façon à être mobile dans le sens axial et ayant une face frontale (24) qui, dirigée vers le raccordement d'eau (60), subit la pression de l'eau lors du processus de pulvérisation,
**caractérisé en ce que**
la buse de pulvérisation (14) repose par son autre face frontale (26) contre une pièce de fermeture (16, 38) qui recouvre de façon étanche le perçage de buse (50) jusqu'à ce qu'elle soit mise en une position ouverte par coulissement axial de la buse de pulvérisation (14) et libère le perçage de buse (50).

2. Système de pulvérisation (10, 56, 58) selon la revendication 1,
**caractérisé en ce que**
la pièce de fermeture (16, 38) possède une bague de support (20) par laquelle elle est maintenue dans le boîtier de buse (12) et/ou dans un corps de buse (46) logé dans celui-ci, et enferme une membrane (22) élastique comme du caoutchouc qui présente dans la zone du perçage de buse (50) une ouverture (54) centrale pouvant se dilater, à laquelle se raccorde au moins une lèvre d'étanchéité (28, 30) dirigée vers l'extérieur pour fermer l'ouverture (54).

3. Système de pulvérisation (10, 56, 58) selon la revendication 2,
**caractérisé en ce que**
la tension propre de la membrane (22) et/ou de la lèvre d'étanchéité (28, 30) génère une force de rappel de la buse de pulvérisation (14).

4. Système de pulvérisation (10, 58) selon les revendications 2 et 3,
**caractérisé en ce que**
la bague de support (20) est introduite dans un creux (66) annulaire côté face frontale du boîtier de buse (12) ou du corps de buse (46) et est maintenue par une bague (18) qui, en l'état ouvert, sert simultanément de butée.

5. Système de pulvérisation (10, 58) selon la revendication 4,
**caractérisé en ce que**
la bague (18) est introduite par pressage ou par vissage dans le boîtier de buse (12) ou dans le corps de buse (46).

6. Système de pulvérisation (56) selon la revendication 2 ou 3,
**caractérisé en ce que**
la pièce de fermeture (38) est constituée en tant que capuchon de fermeture qui comprend le boîtier de buse (12) et s'engage par un bourrelet (40) dans une rainure annulaire (64) du boîtier de buse (12).

7. Système de pulvérisation (56) selon la revendication 6,
**caractérisé en ce que**
la pièce de fermeture (38) présente un bourrelet (42) formé autour des lèvres d'étanchéité (28, 30) qui, en l'état ouvert, sert de butée aux lèvres d'étanchéité (28, 30) et au déplacement axial de la buse de pulvérisation (14).

8. Système de pulvérisation (58) selon l'une quelconque des précédentes revendications,
**caractérisé en ce qu'**
une buse de pulvérisation (14) est logée dans un corps de buse (46) de façon à pouvoir coulisser dans le sens axial, le corps de buse (46) étant logé dans le boîtier de buse (44) de façon à pouvoir être réglé dans une plage angulaire limitée au travers d'une butée sphérique (48).

9. Système de pulvérisation (10, 56, 58) selon l'une quelconque des précédentes revendications,
**caractérisé en ce que**
l'ouverture (54) est assez grande en l'état ouvert pour qu'un et de pulvérisation (32) traverse sans entrave les lèvres d'étanchéité (28, 30) ouvertes de la pièce de fermeture (16, 38), la géométrie du jet étant définie par le perçage de buse (50).

10. Système de pulvérisation (10, 56, 58) selon l'une quelconque des précédentes revendications,
**caractérisé en ce qu'**
une ligne chauffante (62) traverse le raccordement d'eau (60) et un perçage dans le boîtier de buse (12), et parvient à proximité de la buse de pulvérisation (14).
